# FASCICULE DE BREVET EUROPEEN

(11) **EP 3 046 798 B1**
(45) Date de publication et mention de la délivrance du brevet: **28.02.2018**
(21) Numéro de dépôt: 14784285.0
(22) Date de dépôt: 12.09.2014
(51) Int. Cl.: B60L 3/12, B60L 3/00

(54) **PROCEDE DE COMMANDE D'UN SYSTEME ELECTRIQUE DE TRACTION ET SYSTEME ELECTRIQUE DE TRACTION CORRESPONDANT**
VERFAHREN ZUR STEUERUNG EINES ELEKTRISCHEN TRAKTIONSSYSTEMS UND ZUGEHÖRIGES ELEKTRISCHES TRAKTIONSSYSTEM
METHOD FOR CONTROLLING AN ELECTRIC TRACTION SYSTEM AND CORRESPONDING ELECTRIC TRACTION SYSTEM

(30) Priorité: 16.09.2013 FR 1358903
(43) Date de publication de la demande: 27.07.2016
(73) Titulaire: Renault S.A.S., 92100 Boulogne-Billancourt (FR)
(72) Inventeur: BEN AHMED, Walid, F-78960 Voisins le Bretonneux (FR); DOLCINI, Pietro, F-75013 Paris (FR); AIT-HAMMOUDA, Islam, F-92160 Antony (FR); LE-NEEL, Pascal, F-78410 Aubergenville (FR)
(86) Numéro de dépôt international: PCT/FR2014/052269
(87) Numéro de publication internationale: WO 2015/036712

(56) Documents cités:
- EP-A1- 1 981 143
- DE-A1-102011 076 183

## Description

La présente invention se rapporte de manière générale aux domaines de l'électricité et des véhicules automobiles électriques ou hybrides. Plus précisément, l'invention concerne un système de traction pour des véhicules à traction au moins partiellement électrique.

Un tel véhicule comporte au moins une batterie de traction alimentant, via un onduleur, un moteur électrique. La batterie de traction ayant une tension à vide pouvant aller jusqu'à 400V, il est nécessaire d'isoler le système de traction alimenté par cette batterie de traction, du châssis du véhicule. Ainsi les personnes assurant la maintenance du véhicule sont protégées du risque d'électrocution lié au toucher simultané du châssis et d'une des bornes de la batterie de traction du véhicule.

La résistance d'isolation entre la batterie traction du véhicule et le châssis du véhicule est mesurée en permanence pendant le fonctionnement du véhicule, comme décrit par exemple dans la demande de brevet européen EP1981143. Dès que cette résistance d'isolation passe en dessous d'un certain seuil, le fonctionnement du véhicule est restreint, par exemple on interdit une prochaine utilisation du moteur électrique. De plus on interdit la recharge de la batterie de traction étant donné que les courants de toucher passant par un utilisateur sont susceptibles de devenir importants par exemple si le véhicule utilise un chargeur intégré non isolé par un transformateur galvanique du réseau d'alimentation externe rechargeant la batterie de traction.

Or la résistance d'isolation d'un tel véhicule à traction au moins partiellement électrique est susceptible de chuter rapidement en présence d'humidité, notamment lorsque le moteur électrique n'est pas étanche. En effet en présence d'humidité, un ou plusieurs courants de fuite s'installent entre les bobinages du stator du moteur électrique et le carter du moteur électrique, ou entre ces bobinages et un paquet de tôles formant le stator, ou encore entre ces bobinages et le rotor du moteur électrique. Les mécanismes de sécurité liés à la surveillance de la résistance d'isolation du véhicule risquent donc de restreindre souvent la recharge de la batterie de traction et l'utilisation du véhicule à un mode dégradé, par exemple interdisant le mode électrique ou le limitant.

Un des buts de l'invention est de remédier à au moins une partie des inconvénients de la technique antérieure en fournissant un procédé de commande d'un système électrique de traction d'un véhicule et un système électrique de traction correspondant qui rendent plus disponible ce système électrique de traction pour l'utilisateur.

A cette fin, l'invention propose un procédé de commande d'un système électrique de traction d'un véhicule comportant un moteur électrique de traction, une batterie de traction et un onduleur de traction, ledit procédé comportant :
- une étape de détection qu'une mesure d'une résistance d'isolation entre ladite batterie et le châssis du véhicule est en dessous d'un seuil prédéterminé,
- une étape de détection de l'état fermé de relais reliant ladite batterie audit onduleur,
caractérisé en ce que lesdites étapes de détection sont suivies d'une étape d'activation d'un ventilateur de refroidissement dudit moteur électrique de traction, jusqu'à une étape de détection qu'une mesure de ladite résistance d'isolation est supérieure audit seuil prédéterminé, dans la limite d'une première durée prédéterminée.

Grâce à l'invention, lorsqu'on détecte que la résistance d'isolation du véhicule est en dessous d'un seuil prédéterminé, on sèche le moteur électrique du véhicule dès que possible afin de déshumidifier celui-ci. Cela permet à la résistance d'isolation du véhicule de retrouver une valeur ne restreignant pas l'utilisation du système de traction électrique, dans le cas où la diminution de la résistance d'isolation du véhicule est due à de l'humidité. Cette stratégie de séchage du moteur électrique permet d'évacuer le maximum d'eau bloquée dans le moteur et donc également de prolonger l'utilisation du moteur électrique en évitant la dégradation de l'isolation entre les bobinages du stator et la culasse.

Selon une caractéristique avantageuse du procédé de commande selon l'invention, lesdites étapes de détection sont en outre suivies, lorsque l'onduleur est commandé en mode traction, d'une étape d'application d'un mode de commande dégradé audit moteur électrique, favorisant les pertes Joules, jusqu'à une étape de détection qu'une mesure de ladite résistance d'isolation est supérieure audit seuil prédéterminé, dans la limite d'une deuxième durée prédéterminée.

Dans ce mode de commande dégradé appliqué au moteur thermique, on injecte des courants statoriques permettant à la fois d'obtenir le couple demandé par le conducteur, mais également de chauffer le moteur électrique de manière à favoriser le séchage du moteur initié par le ventilateur de refroidissement. Ainsi on accélère le rétablissement de la résistance d'isolation du véhicule à une valeur non restrictive pour l'utilisation du véhicule, dans le cas où la faible valeur de cette résistance d'isolation était due à de l'humidité.

Selon une caractéristique avantageuse du procédé de commande selon l'invention, si au bout de la première ou de la deuxième durée prédéterminée on détecte qu'une mesure de ladite résistance d'isolation est en dessous dudit seuil prédéterminé, ledit procédé comporte une étape d'application d'un mode dégradé interdisant la recharge de ladite batterie par un réseau d'alimentation externe.

En effet si au bout d'un certain temps la résistance d'isolation ne se rétablit pas malgré la stratégie de séchage mise en place, on en déduit que le défaut d'isolation n'est pas due à l'humidité. On cesse alors d'appliquer la stratégie de séchage pour passer dans un mode d'utilisation dégradé du véhicule, interdisant la recharge de la batterie de traction et utilisant par exemple uniquement un moteur thermique, ou signalant par une interface utilisateur qu'une maintenance est à effectuer concernant la résistance d'isolation.

L'invention concerne aussi un système électrique de traction d'un véhicule comportant un moteur électrique de traction, une batterie de traction, un onduleur de traction et un ventilateur de refroidissement dudit moteur électrique de traction, ledit système de traction comportant en outre :
- des moyens de mesure d'une résistance d'isolation entre ladite batterie et le châssis du véhicule,
- des moyens de comparaison des mesures issues desdits moyens de mesure avec un seuil prédéterminé,
- des moyens de détection de l'état fermé de relais reliant ladite batterie audit onduleur,
ledit système électrique de traction étant caractérisé en ce que lesdits moyens de détection sont aptes, lorsque lesdites mesures sont en dessous dudit seuil prédéterminé, à activer ledit ventilateur tant que la résistance d'isolation mesurée par lesdits moyens des mesure reste en dessous dudit seuil prédéterminé, dans la limite d'une première durée prédéterminée.

Avantageusement, que lesdits moyens de détection sont en outre aptes à activer, lorsque l'onduleur est commandé en mode traction et lorsque lesdites mesures sont en dessous dudit seuil prédéterminé, des moyens de commande du moteur électrique dans un mode de dégradé favorisant les pertes Joules, tant que la résistance d'isolation mesurée par lesdits moyens de mesure reste en dessous dudit seuil prédéterminé, dans la limite d'une deuxième durée prédéterminée.

Avantageusement, ledit système selon l'invention comporte en outre des moyens aptes à activer un mode dégradé interdisant la recharge de ladite batterie par un réseau d'alimentation externe, lorsque la résistance d'isolation mesurée par lesdits moyens des mesure reste en dessous dudit seuil prédéterminé au bout de la première ou de la deuxième durée prédéterminée.

Le système électrique de traction selon l'invention présente des avantages analogues à ceux du procédé de commande selon l'invention.

D'autres caractéristiques et avantages apparaîtront à la lecture d'un mode de réalisation préféré décrit en référence aux figures dans lesquelles:
- la figure 1 représente un système électrique de traction selon l'invention dans ce mode de réalisation préféré,
- et la figure 2 représente des étapes d'un procédé de commande selon l'invention dans ce mode de réalisation préféré.

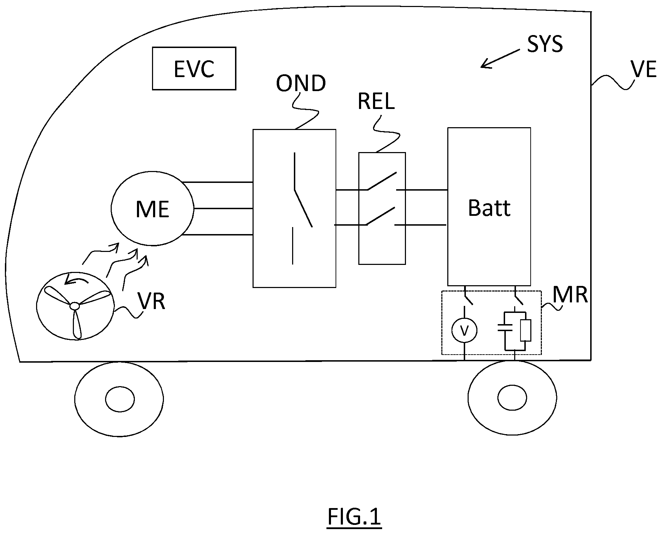

Selon un mode préféré de réalisation de l'invention représenté à la **figure 1****,** un système électrique de traction SYS d'un véhicule électrique VE comporte :
- un moteur électrique de traction ME,
- un onduleur de traction OND,
- et une batterie de traction Batt, permettant d'alimenter le moteur électrique ME en mode traction, c'est-à-dire lorsque le véhicule VE est en mouvement, via l'onduleur de traction OND. Dans cette demande le mode traction implique que les courants statoriques et/ou rotoriques sont non nuls c'est-à-dire que l'onduleur est commandé pour répondre à une consigne de couple moteur. Ce mode traction exclut le mode recharge de la batterie de traction Batt.

Des relais REL permettent de connecter électriquement la batterie de traction Batt à l'onduleur OND, qui reçoit par ailleurs des consignes de commande du moteur électrique ME sur ses transistors depuis une unité de commande électronique, faisant également partie du système de traction SYS.

Le système électrique de traction SYS comporte également un ventilateur de refroidissement VR permettant de refroidir le moteur électrique ME en mode traction.

Le système de traction SYS comporte également des moyens MR de mesure d'une résistance d'isolation entre la batterie de traction Batt et le châssis du véhicule VE. Ces moyens MR de mesure comportent par exemple un voltmètre V apte à être connecté entre le châssis et chacune des bornes de la batterie de traction Batt au moyen d'interrupteurs commandés, et une impédance de valeur connue également apte à être connectée entre le châssis et chacune des bornes de la batterie de traction Batt. Lorsque l'impédance de valeur connue et le voltmètre V sont connectés entre le châssis et une des bornes de la batterie, la mesure prise par le voltmètre V permet à un calculateur EVC du véhicule VE et du système de traction SYS d'en déduire l'impédance d'isolation existant en parallèle entre le châssis du véhicule VE et cette borne de la batterie Batt. Le calculateur EVC détermine alors la résistance d'isolation Ri du véhicule comme la moyenne des impédances d'isolation existantes entre chacune des bornes de la batterie Batt de traction et le châssis du véhicule VE. Les mesures effectuées par les moyens de mesure MR ou le calculateur EVC sont éventuellement filtrées pour éliminer les bruits de mesure. Le procédé selon l'invention utilise dans ce cas les valeurs filtrées de mesure de résistance d'isolation Ri.

Cette mesure de résistance d'isolation issue des moyens de mesure MR et du calculateur EVC est comparée par celui-ci, dès que le véhicule VE est en fonctionnement, à un seuil prédéterminé égal par exemple à 80 ka (kilo Ohms). Ce seuil prédéterminé est préférentiellement fixé légèrement au-dessus d'un seuil critique de 67 kΩ par exemple interdisant la recharge de la batterie de traction Batt.

Lorsque la résistance d'isolation Ri mesurée est en dessous de ce seuil prédéterminé, le calculateur EVC met en oeuvre une stratégie de séchage du moteur électrique ME afin de tenter de faire remonter cette résistance d'isolation Ri au-dessus de ce seuil prédéterminé pour éviter un passage en mode dégradé de l'utilisation du véhicule VE.

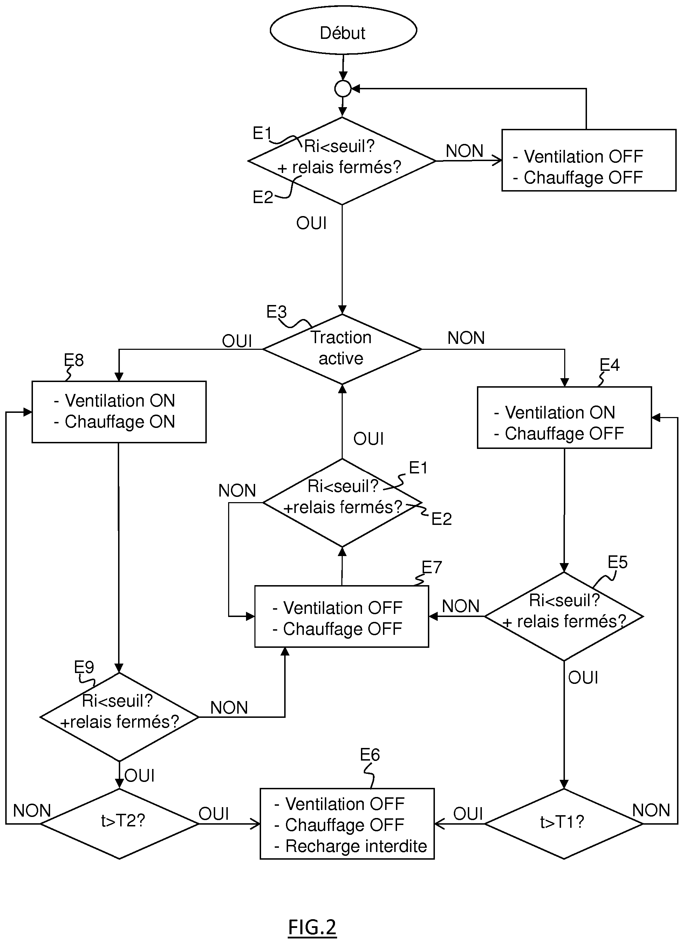

Le calculateur EVC supervise pour cela les relais REL de la batterie de traction, l'onduleur OND et le ventilateur de refroidissement VR. Plus précisément il met en oeuvre un procédé de commande selon l'invention, représenté à la **figure 2** sous forme d'un algorithme comportant des étapes E1 à E9.

L'étape E1 est la détection qu'une mesure de résistance d'isolation Ri est en dessous du seuil prédéterminé.

Parallèlement à cette étape E1, le calculateur EVC détecte la fermeture des relais REL entre la batterie de traction Batt et l'onduleur OND, dans une étape E2. Tant que ces relais REL ne sont pas fermés, la stratégie de séchage n'est pas mise en oeuvre. En effet la mise en route du ventilateur de refroidissement VR dans ces conditions risquerait de vider la batterie 14V de servitude du véhicule VE. Si les relais REL sont déjà fermés lors de l'étape E1, cette étape E2 s'entend comme la vérification de l'état fermé des relais REL.

Lorsqu'on a détecté que la résistance d'isolation Ri est en dessous du seuil prédéterminé à l'étape E1 et que les relais REL sont fermés à l'étape E2, on détermine dans une étape E3 si le véhicule VE est en mode traction ou non. Si le véhicule VE est en mode traction alors on passe à l'étape E8 décrite plus loin, sinon on passe à l'étape E4.

L'étape E4 est l'activation du ventilateur VR de refroidissement. Préférentiellement dans cette étape E4 le ventilateur VR est lancé à sa vitesse maximum afin d'évacuer le plus d'eau possible à l'intérieur du moteur électrique ME. Cette étape E4 d'activation est effectuée :
- tant que l'on n'a pas détecté dans une étape E5 qu'une mesure de la résistance d'isolation Ri est devenue supérieure au seuil prédéterminé, ou une ouverture des relais REL,
- et dans la limite d'une durée d'activation t du ventilateur VR inférieure à une durée d'activation T1 prédéterminée de 10 minutes par exemple. Cette durée d'activation T1 est calibrée en fonction du temps nécessaire pour retrouver un niveau d'isolation satisfaisant dans le cas où le défaut d'isolation est dû à de l'humidité et que seul le ventilateur VR est utilisé comme moyen de séchage du moteur électrique ME.

Si on a détecté dans une étape E5 qu'une mesure de la résistance d'isolation Ri est devenue supérieure au seuil prédéterminé, ou une ouverture des relais REL, alors on désactive le ventilateur VR de refroidissement dans une étape E7.

De même si à l'étape E4 la durée d'activation du ventilateur VR atteint la durée prédéterminée T1 alors le ventilateur VR est désactivé dans une étape E6, et un mode dégradé d'utilisation du véhicule VE dans lequel la recharge de la batterie de traction Batt est interdite, est mis en place. Cela permet d'éviter de sécher le moteur électrique ME lorsque le défaut d'isolation détecté à l'étape E1 vient d'ailleurs que du moteur électrique ME. L'application de ce mode dégradé empêche en outre au calculateur EVC de remettre en oeuvre une stratégie de séchage du moteur électrique au prochain réveil du véhicule électrique ou à sa prochaine tentative de recharge de la batterie de traction Batt.

L'étape E8 est :
- l'activation du ventilateur VR de refroidissement, celui-ci étant lancé à sa vitesse maximum comme à l'étape E4,
- et l'application d'un mode de commande dégradé au moteur électrique ME, favorisant les pertes Joules. Pour cela le calculateur EVC lit par exemple dans une cartographie spécifique à ce mode dégradé, les valeurs de courant à appliquer au stator et/ou au rotor pour obtenir le couple moteur demandé par le conducteur, et commande les transistors de l'onduleur OND en conséquence. Ces valeurs de courant permettent de chauffer le moteur électrique plus que si l'on utilisait les valeurs de courant d'un mode nominal d'utilisation du véhicule VE, fournissant la même valeur de couple moteur, mais privilégiant le rendement du moteur électrique afin de décharger le moins possible la batterie de traction Batt. Ce chauffage du moteur électrique n'est mis en oeuvre que lorsque le véhicule est en mode traction pour ne pas générer du couple moteur non désiré qui pourrait faire bouger le véhicule alors que celui-ci est à l'arrêt.

Cette étape E8 est effectuée :
- tant que l'on n'a pas détecté dans une étape E9 qu'une mesure de la résistance d'isolation Ri est devenue supérieure au seuil prédéterminé, ou une ouverture des relais REL,
- et dans la limite d'une durée d'activation t du ventilateur VR et d'application du mode dégradé de commande du moteur électrique inférieure à une durée d'activation T2 prédéterminée de 5 minutes par exemple. Cette durée d'activation T2 est calibrée en fonction du temps nécessaire pour retrouver un niveau d'isolation satisfaisant dans le cas où le défaut d'isolation est dû à de l'humidité et qu'à la fois le ventilateur VR et les courants statoriques et/ou rotorique sont utilisés comme moyens de séchage du moteur électrique ME. En variante de réalisation cette deuxième durée prédéterminée T2 peut être choisie égale à la première durée prédéterminée T1. Dans encore une autre variante, la durée d'activation maximale du ventilateur VR dans cette étape E8 est différente de la durée d'activation maximale du mode dégradé de commande du moteur électrique ME, par exemple supérieure à celle-ci. Le ventilateur VR est par exemple activé tout le temps où le véhicule VE est en mode traction, mais pas forcément à sa vitesse maximum pendant tout ce temps, de manière à maintenir la température du moteur électrique ME en dessous d'un seuil prédéfini.

Si on a détecté dans une étape E9 qu'une mesure de la résistance d'isolation Ri est devenue supérieure au seuil prédéterminé, ou une ouverture des relais REL, alors on désactive le ventilateur VR de refroidissement et on réapplique un mode de commande nominal au moteur électrique ME, dans une étape E7.

De même si à l'étape E8 la durée d'activation du ventilateur VR atteint la durée prédéterminée T2 alors le ventilateur VR est désactivé et on réapplique un mode de commande nominal au moteur électrique ME dans une étape E6. De plus un mode dégradé d'utilisation du véhicule VE dans lequel la recharge de la batterie de traction Batt est interdite, est mis en place dans cette étape E6.

Si la stratégie de séchage mise en place s'est stoppée lors d'une étape E7, c'est-à-dire suite au rétablissement de la valeur de résistance d'isolation au-dessus du seuil prédéterminé, alors elle pourra être répétée suite à de nouvelles étapes E1 et E2 de détection d'un mesure de résistance d'isolation trop faible et de relais batteries REL fermés.

Bien que dans ce mode préféré de réalisation le véhicule VE est un véhicule électrique, l'invention est applicable à un véhicule partiellement électrique tel qu'un véhicule hybride. De même d'autres modes de réalisation sont possibles dans lesquels par exemple on n'utilise que le séchage par le ventilateur de refroidissement et non le chauffage du moteur électrique par les courants statoriques, ou dans lesquels le procédé de commande est réparti dans plusieurs calculateurs du véhicule ne faisant pas tous partis du système électrique de traction du véhicule.

## Revendications

1. Procédé de commande d'un système (SYS) électrique de traction d'un véhicule (VE) comportant un moteur électrique (ME) de traction, une batterie (Batt) de traction et un onduleur (OND) de traction, ledit procédé comportant :
- une étape (E1) de détection qu'une mesure d'une résistance d'isolation (Ri) entre ladite batterie (Batt) et le châssis du véhicule (VE) est en dessous d'un seuil prédéterminé,
- une étape (E2) de détection de l'état fermé de relais reliant ladite batterie (Batt) audit onduleur (OND),
**caractérisé en ce que** lesdites étapes (E1, E2) de détection sont suivies d'une étape (E4, E8) d'activation d'un ventilateur de refroidissement (VR) dudit moteur électrique (ME) de traction, jusqu'à une étape de détection (E5, E9) qu'une mesure de ladite résistance d'isolation (Ri) est supérieure audit seuil prédéterminé, dans la limite d'une première durée prédéterminée (T1, T2).

2. Procédé de commande selon la revendication 1, **caractérisé en ce que** lesdites étapes(E1, E2) de détection sont en outre suivies, lorsque l'onduleur (OND) est commandé en mode traction, d'une étape d'application (E8) d'un mode de commande dégradé audit moteur électrique (ME), favorisant les pertes Joules, jusqu'à une étape (E9) de détection qu'une mesure de ladite résistance d'isolation (Ri) est supérieure audit seuil prédéterminé, dans la limite d'une deuxième durée prédéterminée (T2).

3. Procédé de commande selon la revendication 1 ou 2, **caractérisé en ce que**, si au bout de la première (T1) ou de la deuxième (T2) durée prédéterminée on détecte qu'une mesure de ladite résistance d'isolation est en dessous dudit seuil prédéterminé, ledit procédé comporte une étape (E6) d'application d'un mode dégradé interdisant la recharge de ladite batterie (Batt) par un réseau d'alimentation externe.

4. Système électrique (SYS) de traction d'un véhicule (VE) comportant un moteur électrique (ME) de traction, une batterie (Batt) de traction, un onduleur (OND) de traction et un ventilateur de refroidissement (VR) dudit moteur électrique (ME) de traction, ledit système (SYS) de traction comportant en outre :
- des moyens de mesure (MR) d'une résistance d'isolation (Ri) entre ladite batterie (Batt) et le châssis du véhicule (VE),
- des moyens de comparaison des mesures issues desdits moyens de mesure (MR) avec un seuil prédéterminé,
- des moyens de détection de l'état fermé de relais (REL) reliant ladite batterie (Batt) audit onduleur (OND),
ledit système (SYS) électrique de traction étant **caractérisé en ce que** lesdits moyens de détection sont aptes, lorsque lesdites mesures sont en dessous dudit seuil prédéterminé, à activer ledit ventilateur (VR) tant que la résistance d'isolation (Ri) mesurée par lesdits moyens des mesure (MR) reste en dessous dudit seuil prédéterminé, dans la limite d'une première durée prédéterminée (T1).

5. Système électrique (SYS) de traction selon la revendication 4, **caractérisé en ce que** lesdits moyens de détection sont en outre aptes à activer, lorsque l'onduleur (OND) est commandé en mode traction et lorsque lesdites mesures sont en dessous dudit seuil prédéterminé, des moyens de commande du moteur électrique (ME) dans un mode de dégradé favorisant les pertes Joules, tant que la résistance d'isolation (Ri) mesurée par lesdits moyens de mesure (MR) reste en dessous dudit seuil prédéterminé, dans la limite d'une deuxième durée prédéterminée (T2).

6. Système électrique (SYS) de traction selon la revendication 4 ou 5, **caractérisé en ce qu'**il comporte en outre des moyens aptes à activer un mode dégradé interdisant la recharge de ladite batterie (Batt) par un réseau d'alimentation externe, lorsque la résistance d'isolation (Ri) mesurée par lesdits moyens des mesure (MR) reste en dessous dudit seuil prédéterminé au bout de la première (T1) ou de la deuxième (T2) durée prédéterminée.

## Patentansprüche

1. Verfahren zur Steuerung eines elektrischen Traktionssystems (SYS) eines Fahrzeugs (VE), umfassend einen elektrischen Traktionsmotor (ME), eine Traktionsbatterie (Batt) und einen Traktionswechselrichter (OND), wobei das Verfahren Folgendes aufweist:
- einen Schritt (E1) des Erkennens, dass eine Messung eines Isolationswiderstands (Ri) zwischen der Batterie (Batt) und dem Fahrgestell des Fahrzeugs (VE) unter einem vorbestimmten Schwellenwert liegt,
- einen Schritt (E2) des Erkennens des geschlossenen Zustands des Relais, das die Batterie (Batt) mit dem Wechselrichter (OND) verbindet,
**dadurch gekennzeichnet, dass** auf die Schritte (E1, E2) des Erkennens ein Schritt (E4, E8) des Aktivierens eines Kühlungsventilators (VR) des elektrischen Traktionsmotors (ME) bis zu einem Schritt des Erkennens (E5, E9) folgt, dass eine Messung des Isolationswiderstands (Ri) innerhalb der Grenze einer ersten vorbestimmten Zeitdauer (T1, T2) über dem vorbestimmten Schwellenwert liegt.

2. Verfahren zur Steuerung nach Anspruch 1, **dadurch gekennzeichnet, dass** auf die Schritte (E1, E2) des Erkennens, wenn der Wechselrichter (OND) im Traktionsmodus gesteuert wird, ferner ein Schritt des Anwendens (E8) eines herabgestuften Steuermodus auf den elektrischen Motor (ME), der die Joule-Verluste begünstigt, bis zu einem Schritt (E9) des Erkennens folgt, dass eine Messung des Isolationswiderstands (Ri) innerhalb der Grenze einer zweiten vorbestimmten Zeitdauer (T2) über dem vorbestimmten Schwellenwert liegt.

3. Verfahren zur Steuerung nach Anspruch 1 oder 2, **dadurch gekennzeichnet, dass**, wenn am Ende der ersten (T1) oder der zweiten (T2) vorbestimmten Zeitdauer erkannt wird, dass eine Messung des Isolationswiderstands unter dem vorbestimmten Schwellenwert liegt, das Verfahren einen Schritt (E6) des Anwendens eines herabgestuften Modus aufweist, der das Wiederaufladen der Batterie (Batt) durch ein externes Versorgungsnetz untersagt.

4. Elektrisches Traktionssystem (SYS) eines Fahrzeugs (VE), umfassend einen elektrischen Traktionsmotor (ME), eine Traktionsbatterie (Batt), einen Traktionswechselrichter (OND) und einen Kühlungsventilator (VR) des elektrischen Traktionsmotors (ME), wobei das Traktionssystem (SYS) ferner Folgendes aufweist:
- Mittel zum Messen (MR) eines Isolationswiderstands (Ri) zwischen der Batterie (Batt) und dem Fahrgestell des Fahrzeugs (VE),
- Mittel zum Vergleichen der Messungen, die aus den Mitteln zum Messen (MR) hervorgegangen sind, mit einem vorbestimmten Schwellenwert,
- Mittel zum Erkennen des geschlossenen Zustands des Relais (REL), das die Batterie (Batt) mit dem Wechselrichter (OND) verbindet,
wobei das elektrische Traktionssystem (SYS) **dadurch gekennzeichnet ist, dass** die Mittel zum Erkennen geeignet sind, wenn die Messungen unter dem vorbestimmten Schwellenwert liegen, den Ventilator (VR) zu aktivieren, solange der Isolationswiderstand (Ri), der von den Mitteln zum Messen (MR) gemessen wird, innerhalb der Grenze einer ersten vorbestimmten Zeitdauer (T1) unter dem vorbestimmten Schwellenwert bleibt.

5. Elektrisches Traktionssystem (SYS) nach Anspruch 4, **dadurch gekennzeichnet, dass** die Mittel zum Erkennen ferner geeignet sind, wenn der Wechselrichter (OND) im Traktionsmodus gesteuert wird und wenn die Messungen unter dem vorbestimmten Schwellenwert liegen, Mittel zum Steuern des elektrischen Motors (ME) in einem herabgestuften Steuermodus, der die Joule-Verluste begünstigt, zu aktivieren, solange der Isolationswiderstand (Ri), der von den Mitteln zum Messen (MR) gemessen wird, innerhalb der Grenze einer zweiten vorbestimmten Zeitdauer (T2) unter dem vorbestimmten Schwellenwert bleibt.

6. Elektrisches Traktionssystem (SYS) nach Anspruch 4 oder 5, **dadurch gekennzeichnet, dass** es ferner Mittel aufweist, die geeignet sind, einen herabgestuften Modus zu aktivieren, der das Wiederaufladen der Batterie (Batt) durch ein externes Versorgungsnetz untersagt, wenn der Isolationswiderstand (Ri), der von den Mitteln zum Messen (MR) gemessen wird, am Ende der ersten (T1) oder der zweiten vorbestimmten Zeitdauer (T2) unter dem vorbestimmten Schwellenwert bleibt.

## Claims

1. Method for controlling an electric drive system (SYS) of a vehicle (VE) including an electric drive motor (ME), a drive battery (Batt) and a drive inverter (OND), said method including:
- a step (E1) of detecting that a measurement of an insulation resistance (Ri) between said battery (Batt) and the chassis of the vehicle (VE) is below a preset threshold; and
- a step (E2) of detecting the closed state of relays connecting said battery (Batt) to said inverter (OND);
**characterized in that** said detecting steps (E1, E2) are followed by a step (E4, E8) of activation of a cooling fan (VR) of said electric drive motor (ME), until a step (E5, E9) of detection that a measurement of said insulation resistance (Ri) is above said preset threshold, within the limit of a first preset duration (T1, T2).

2. Controlling method according to Claim 1, **characterized in that** said detecting steps (E1, E2) are furthermore followed, when the inverter (OND) is in drive mode, by a step (E8) of applying a degraded control mode to said electric motor (ME), promoting Joule heating, until a step (E9) of detection that a measurement of said insulation resistance (Ri) is above said preset threshold, within the limit of a second preset duration (T2).

3. Controlling method according to Claim 1 or 2, **characterized in that**, if at the end of the first (T1) or second (T2) preset duration a measurement of said insulation resistance is detected to be below said preset threshold, said method includes a step (E6) of applying a degraded mode preventing the recharging of said battery (Batt) by an external power grid.

4. Electric drive system (SYS) for a vehicle (VE) including an electric drive motor (ME), a drive battery (Batt), a drive inverter (OND) and a fan (VR) for cooling said electric drive motor (ME), said drive system (SYS) furthermore including:
- means (MR) for measuring an insulation resistance (Ri) between said battery (Batt) and the chassis of the vehicle (VE);
- means for comparing the measurements issued from said measuring means (MR) with a preset threshold; and
- means for detecting the closed state of relays (REL) connecting said battery (Batt) to said inverter (OND),
said electric drive system (SYS) being **characterized in that** said detecting means are able, when said measurements are below said preset threshold, to activate said fan (VR) for as long as the insulation resistance (Ri) measured by said measuring means (MR) remains below said preset threshold, within the limits of a first preset duration (T1).

5. Electric drive system (SYS) according to Claim 4, **characterized in that** said detecting means are furthermore able to activate, when the inverter (OND) is in drive mode and when said measurements are below said preset threshold, means for controlling the electric motor (ME) into a degraded mode promoting Joule heating, for as long as the insulation resistance (Ri) measured by said measuring means (MR) remains below said preset threshold, within the limit of a second preset duration (T2).

6. Electric drive system (SYS) according to Claim 4 or 5, **characterized in that** it furthermore includes means able to activate a degraded mode preventing the recharging of said battery (Batt) by an external power grid, when the insulation resistance (Ri) measured by said measuring means (MR) remains below said preset threshold at the end of the first (T1) or second (T2) preset duration.
